# EUROPEAN PATENT SPECIFICATION

(11) **EP 3 156 376 B1**
(45) Date of publication and mention of the grant of the patent: **12.12.2018**
(21) Application number: 15189577.8
(22) Date of filing: 13.10.2015
(51) Int. Cl.: C03B 7/10

(54) **A DEVICE FOR CUTTING AND FORMING GOBS OF MOLTEN GLASS**
VORRICHTUNG ZUM SCHNEIDEN UND FORMEN VON KLUMPEN AUS GESCHMOLZENEM GLAS
DISPOSITIF SERVANT À COUPER ET À FORMER DES PARAISONS DE VERRE FONDU

(43) Date of publication of application: 19.04.2017
(73) Proprietor: BDF Industries S.P.A., 36100 Vicenza (IT)
(72) Inventor: TAMBORINI, Matteo, i-36100 Vicenza (IT); DALLA FONTANA, Oscar, i-36100 Vicenza (IT)
(74) Representative: De Bonis, Paolo

(56) References cited:
- EP-A1- 0 549 302
- EP-A2- 0 712 812
- EP-B1- 0 903 326
- CN-A- 1 459 426
- GB-A- 2 175 664

## Description

### Field of the invention

The present invention relates to a device for cutting and forming gobs of molten glass. Particularly, the invention has been developed with reference to devices for cutting and forming gobs of molten glass including:
- a support frame,
- a first blade-carrying carriage and a second blade carrying-carriage, each including at least one blade for cutting gobs of molten glass, said first and second blade-carrying carriages being movable in a direction of travel along at least one linear guide between a position of minimum mutual distance and a position of maximum mutual distance,
- a first and a second motor unit, each operatively associated to a corresponding one of said first and second blade-carrying carriages, each of said first and second motor units being configured for operating said first and second blade-carrying carriages independently and with a reciprocating motion along said direction of travel, so as to determine, alternatively, a mutual approaching or departure thereof.

### Prior art and the general technical problem

The devices for cutting and forming gobs of molten glass are used in combination with moulds for forming hollow glass (for example parison moulds) in a position comprised between a casting hopper of the molten glass wherefrom one or more continuous and monolithic flows of molten glass flow out, and corresponding feeding ports of the aforesaid forming moulds. The feeding ports are typically fed via deviator scoops that receive the gobs which are cut and formed by the subject cutting device.

One of the main problems of the devices for cutting and forming gobs of molten glass concerns the need to operate with tighter and tighter operation frequencies, so as to guarantee a high number of cuts per minute (typically comprised between 200 and 260 cuts/min).

Not only that: in order to increase the production, it is extremely widespread to use devices for cutting and forming gobs of molten glass which are capable of cutting and forming plural gobs of molten glass at the same time.

These multiple cut devices include generally a pair of blade-carrying carriages, each including plural blades for the contemporary creation of a corresponding plurality of gobs of molten glass at each cut.

As known, the blade-carrying carriages of device for cutting and forming of gobs of molten glass move along a direction of travel borne by linear guides between a position of maximum mutual distance and a position of minimum mutual distance, wherein the cut of the gobs occurs in the movement towards the minimum mutual distance position.

The motion of each of the blade-carrying carriages occurs with opposite directions and is of linear reciprocating type, so as to achieve an equally linear cutting action. In various known solutions the devices for cutting and forming of gobs of molten glass are equipped with a motor unit including a single motor and one or more mechanical transmissions, all operated by the single motor and providing the displacement of the blade-carrying carriages. This entails, accordingly, the impossibility of an independent positioning adjustment between the two blade-carrying carriages.

Such a solution markedly limits the maximum translational speeds of the blade-carrying carriages along the direction of travel, eventually limiting the cutting frequency, in that:
- each single motor is requested to output a torque needed to accelerate and decelerate both the blade-carrying carriages, and to work against the combined resisting action of the forces that are developed during the cutting of the gobs of glass, of the inertial forces of the blade-carrying carriages themselves, and of the transmission, as well as the overall friction proper of complex mechanisms,
- such a system inevitably renders the cutting process "stiff", in so far as the translation of the two blade-carrying carriages are bound to one another via the respective mechanical transmissions, without any possibility of independent adjustment,
- the stiffness of the system prevents any electronic intervention in the active control process of the position of the blade-carrying carriages (and so of the blades) in an independent fashion, and
- the system of mechanical transmissions, that receive the motions from a single motor and transfers the latter to the blade-carrying carriages, suffers from positioning errors and plays in the couplings (misalignment, offsets, etc.) due to the required constructional complexity -as well as the complexity in the tuning and assembly- that cannot be compensated during the operation of the machine. This at present forces to envisage operations of re-calibration and alignment of the blades which are to be executed necessarily during machine shutdown.

The possibility to dynamically adjust the positions of the blades at each moment of the cutting process thus turns out to be a more and more important condition in view of the increase of the cutting frequency.

In particular , the device for cutting and forming of gobs of molten glass plays a very important role on the quality of the finished product because the gobs, following the cut thereof, fall under the sole effect of the G force in the deviator scoops that feed the moulds of the forming machine following a trajectory that is strongly influenced by the dynamics of the cut itself. This means that possible inaccuracies in the position of the blades during the cut result in abrupt speed losses inbound the deviator scoops that pass on, in a sort of domino effect, to the entire process of feeding the gobs to the forming machine, thereby causing severe delays in the delivery to the moulds of the forming machines.

The problem in point has been tackled in a number of prior art documents, among which European Patent EP 0 903 326 B1 in the name of the same Applicant. In the illustrated solution each of the two blade-carrying carriages is associated to a corresponding linear motor that provides the operation thereof with a reciprocating motion along the direction of travel to achieve the cut of the gobs of molten glass.

However, this solution does not allow to satisfy the two needs indicated above, that is to say the contemporary possibility to independently and dynamically adjust the position of the blades and to reach a high cutting frequency, in so far as -particularly in relation to the second need - the linear motor has the intrinsic disadvantage of having to operate against the inertia of the blade-carrying carriages at the maximum value thereof, in so far as the blade-carrying carriages are directly carried by the slider of the linear motors themselves.

### Object of the invention

The object of the present invention is that of solving the technical problems previously mentioned. In particular, the object of the invention is that of providing a device for cutting and forming of gobs of molten glass wherein it is possible to dynamically and independently adjust the position of the blade-carrying carriages and that allows at the same time to operate with high cutting frequencies without a penalty on the quality of the finished product.

### Summary of the invention

The object of the present invention is achieved by a device having the features forming the subject of one or more of the following claims, which form an integral part of the technical disclosure herein provided in relation to the invention.

In particular, the object of the invention is achieved by a device for cutting and forming of gobs of molten glass having all the features listed at the beginning of the present description and furthermore characterized in that each motor unit includes a rotary electric motor and a transmission that connects said rotary electric motor to the corresponding blade-carrying carriage and is configured to transform the rotary motion received by the rotary electric motor into a linear motion of the corresponding blade-carrying carriages along the direction of travel.

### Brief description of the attached figures

The invention will now be described with reference to the attached figures, provided purely by way of non limiting example, wherein:
- figure 1 is a perspective view of a device for cutting and forming of gobs of molten glass according to an embodiment of the invention,
- figure 2 is a plane view according to the arrow II of figure 1,

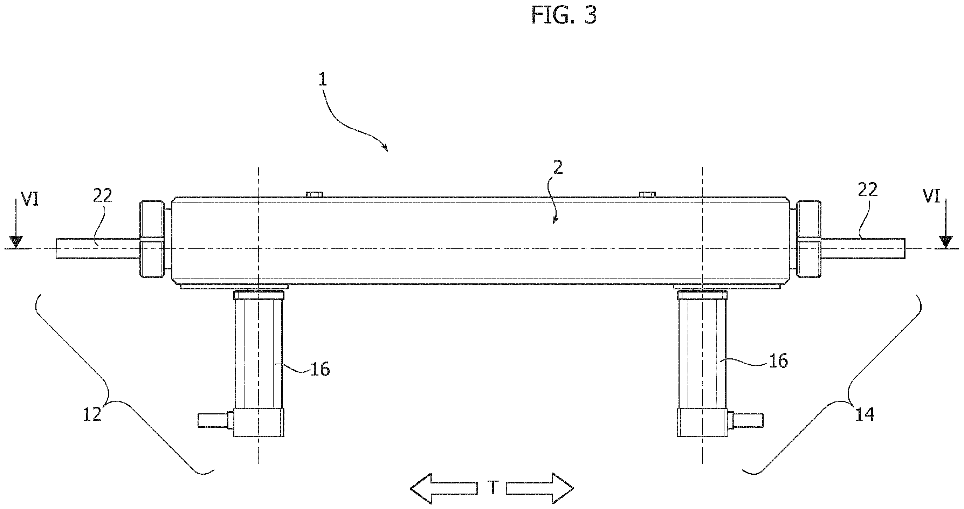

- figure 3 is a side view according to the arrow III of figure 1,

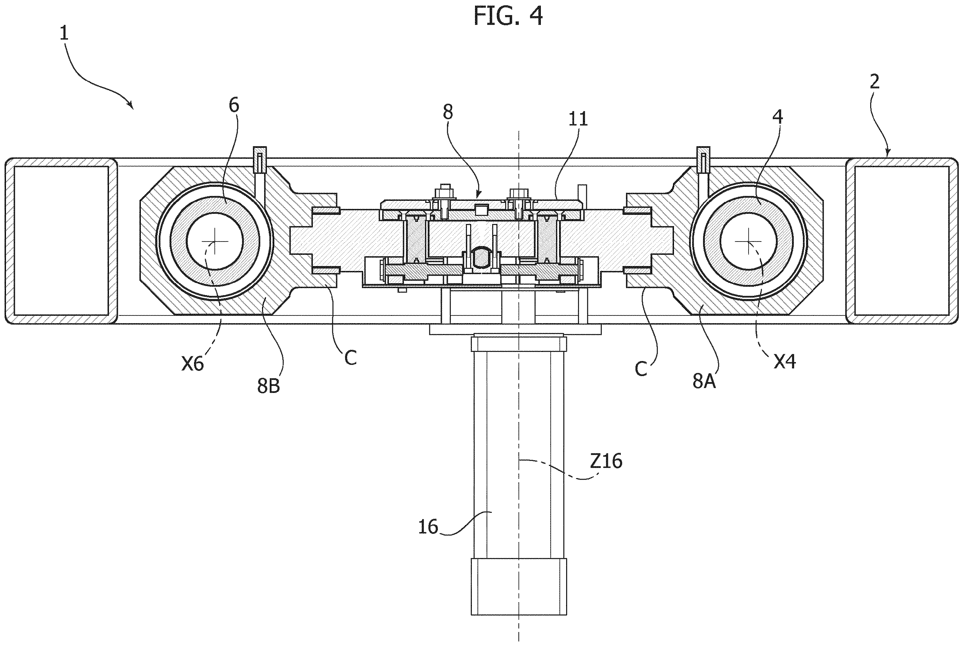

- figure 4 is a sectional view according to the mark IV-IV of figure 2,

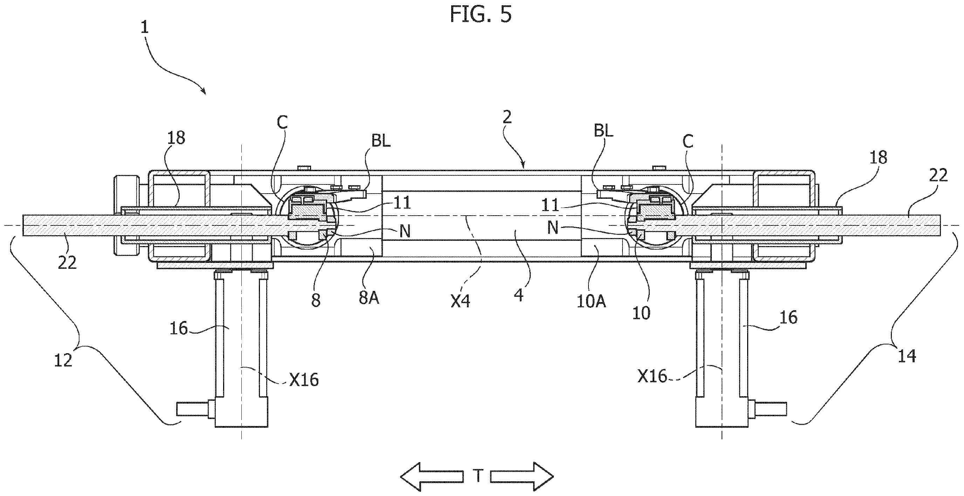

- figure 5 is a sectional view according to the mark V-V of figure 2, and

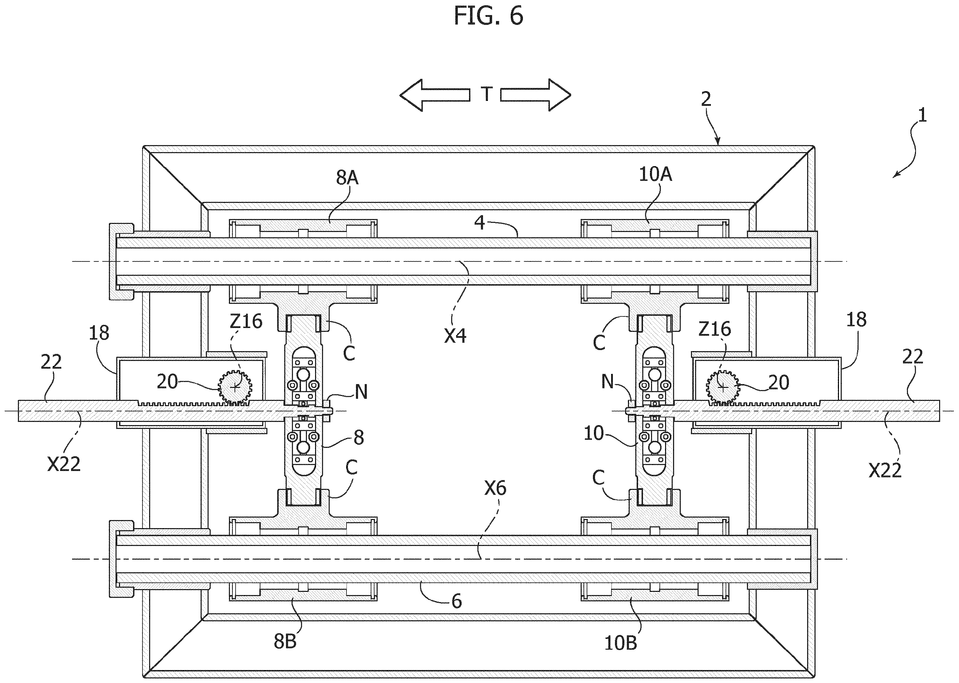

- figure 6 is a sectional view according to the mark VI-VI of figure 3.

### Detailed description of embodiments of the invention

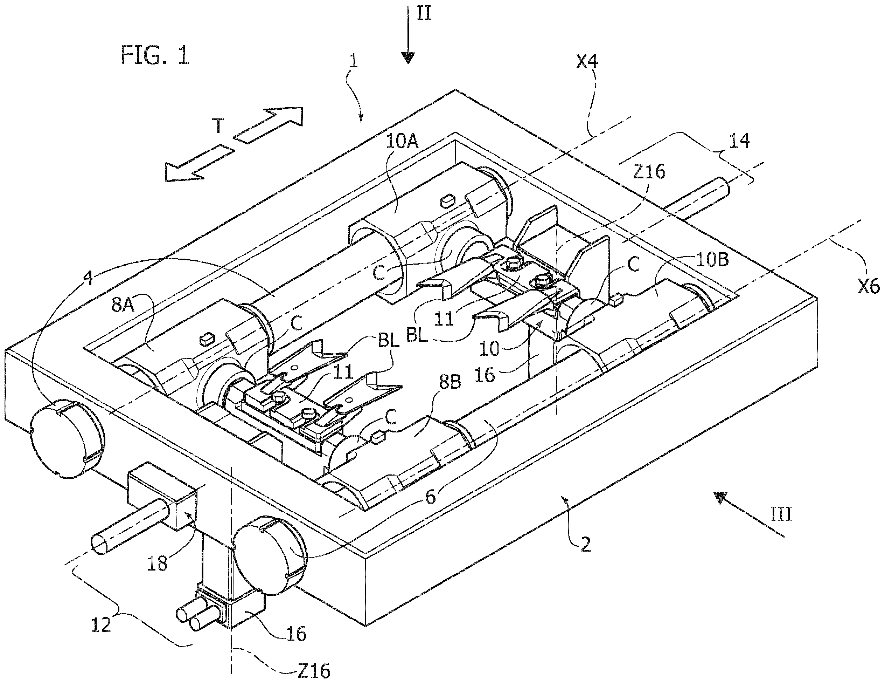

In figure 1 the reference number 1 designates as a whole a device for cutting and forming of gobs of molten glass according to an embodiment of the invention. The device 1 includes a support frame 2 having preferentially the shape of a quadrangular frame wherein a first and a second rectilinear guides 4, 6 are mounted, preferably provided by way of tubular elements extending bridgewise between opposite sides of the support frame 2.

Each of the rectilinear guides extends along a respective longitudinal axes X4, X6 parallel to a direction of travel T. The first and the second blade-carrying carriage 8, 10 are mounted slidable along the direction of travel T on rectilinear guides 4, 6. In this regard, the rectilinear guides 4, 6 bear the blade-carrying carriages 8, 10 by means of four sliders indicated by the references 8A, 8B and 10A, 10B to which are coupled, respectively, the first blade-carrying carriage 8 (sliders 8A and 8B) and the second blade-carrying carriage 10 (sliders 10A, 10B). The letters A and B in association to the heading of each slider indicate the mounting on the guide 4 (letter A) or on the guide 6 (letter B), respectively, while the number 8 or 10, as seen, indicates the association to the corresponding blade-carrying carriages.

More in detail, each slider 8A, 8B, 10A, 10B is configured substantially as a knuckle with a "T-shape" wherein a first portion of the knuckle corresponds to the portion that fits onto the guides 4, 6 and that allows the sliding movement of the sliders 8A, 8B, 10A, 10B on the aforesaid guides, while a second portion of the "T-shape" orthogonal to the first portion, includes a cylindrical collar C that serves as a coupling seat for the opposite ends of the corresponding blade-carrying carriage (8, 10) that is in this way rigidly connected to respective sliders.

In other preferred embodiments each slider 8A, 8B, 10A, 10B is configured as a substantially hollow element having the same T-shape described above and housing therein, particularly within the first portion, a pair of knuckles slidably mounted on a corresponding one of the rectilinear guides 4, 6. Particularly, the knuckles may be arranged in correspondence of opposite ends of the corresponding slider 8A, 8B, 10A, 10B along the axes X4 or X6. The second portion of the slider, including the collar C, is -instead- unchanged.

Whatever the embodiment considered, within the collars C a system is envisaged for preventing the rotation of the corresponding blade-carrying carriage 8, 10 around an axis which is transversal with respect to the axes X4 and X6 and running through the collars C of the two sliders themselves of each carriage (8A, 8B, and 10A, 10B respectively).

For example, a shape coupling may be envisaged between the blade-carrying carriage and the respective sliders via one or more surfaces - preferably plane - that abut on one another preventing the rotation. Alternatively, it is possible to couple the blade-carrying carriages 8, 10 to the corresponding sliders via one or more mounting pins.

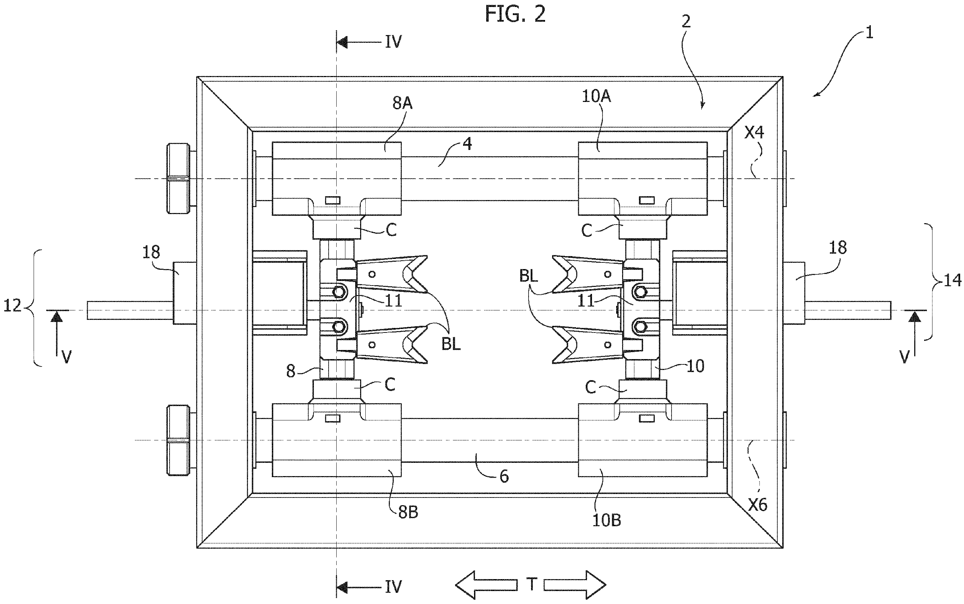

It will be appreciated that globally, with reference to figure 2, the complex of each pair of sliders 8A, 8B, 10A, 10B defines together with a corresponding blade-carrying carriage 8, 10, a mobile unit having a substantially "H"-shaped plan.

On each blade-carrying carriage 8, 10 a blade-carrying unit 11 is mounted to which in this embodiments two blades BL are fixed, particularly dovetail blades configured for the rectilinear cut. The blade carrying unit 11 may be provided in various known ways and can house one or more blades BL as a function of the number of the gobs to be cut and formed at the same time. For example, in various embodiments, the blades BL of the two blade carrying units 11 are mounted at a different height, meaning by this a different distance from the plane defined by the axes X4 and X6. In such embodiments, the position of minimum mutual distance of the blades BL - moving to which the cut and the formation of the gob is achieved - is an overlapping position of the blades, which is possible thanks to the height staggering.

Furthermore, it is generally envisaged the possibility of spatial adjustment in the transverse direction with respect to the axes X4, X6, and in height only for the blades of one of the two units 11. Generally, all the blades BL are instead adjustable in the longitudinal position (along the axes X4 and X6) on each of the two blade-carrying units 11.

Additionally, on the blade-carrying carriage that bears the unit 11 whose blades are adjustable only longitudinally a gob guiding device is installed for each blade BL, wherein each gob guiding device is adjustable in position (transversal, longitudinal and vertical) with respect to the corresponding blade BL.

To each of the blade-carrying carriages 8, 10 a first and a second motor unit 12 (carriage 8) and 14 (carriage 10) are correspondingly associated, identical to one another and located in correspondence of opposite ends of the frame 2.

Each motor unit 12, 14 includes a rotary electric motor 16 having a rotor rotatable around an axis of rotation Z16 that in this embodiment is orthogonal to the axes X4, X6. It is furthermore part of each motor unit 12, 14 a transmission that connects the electric rotary motor 16 to the corresponding blade-carrying carriage 8, 10.

In this embodiment the transmission is housed within a casing 18, preferably filled with a lubricant oil, and includes:
- a pinion 20 connected in rotation to the shaft of the rotary electric motor 16 and driven in rotation by means of the latter, and
- a rack 22 slidably mounted axially along an axis X22 within the casing 18 and meshing with the pinion 20.

The axis X22 is parallel to the axes X4, X6.

The rack 22 is connected to the blade-carrying carriage 8, 10 of the corresponding motor unit, so as to rigidly translate therewith.

In the embodiment illustrated herein, an end of each of the racks 22 (preferably with a substantially circular section) exhibits a reduction in section that provides a shoulder that abuts against the walls of the corresponding blade-carrying carriage 8, 10 and penetrates inside the latter to be then locked by means of a nut N. To this end, on the portion with a reduced section of the rack 22 a thread is provided. Other constraint solutions are naturally possible, for example a solution that provides an isostatic constraint layout, and that provides a spherical joint (for example of the Uniball® type) between the rack 22 and corresponding a blade-carrying carriage 8, 10.

Inside each casing 18 it is furthermore housed a clearance recovery device of the gib type that allows to adjust in a precise manner the meshing play between the pinion 20 and the rack 22. It should be observed that the adjustment of the play occurs along a direction which is orthogonal both to the axis Z16 and to the axes X4, X6, X22, in so far as the line orthogonal to the line of contacts between the pinion 20 and the rack 22 is orthogonal to the axes X and Z.

In case the isostatic constraint layout above is used, it is possible to omit the play recovery device of the gib type in favour of solution that envisages the mounting of the entire motor unit 12, 14 on slide movable along a transversal axis, orthogonal to the contact plane between the pinion 20 and rack 22.

In alternative embodiments the motor unit 12, 14 may include, in place of the transmission housed in the casing 18 and using the pinion 20 and the rack 22, a transmission based on a crank and rod mechanism. In such case, the crank is connected in rotation to the shaft of the rotary electric motor 16 and rotates around the axis Z16, while the rod has a first end articulated to the afore mentioned crank, and the second end articulated to the corresponding blade-carrying carriage 8, 10.

The entire cutting area of the device 1, particularly the area of the blades BL is cooled by means of a water jet cooling system that equips the device 1 and whose water jet (or similar cooling fluid) ejected by said cooling system impinges anyway in a generalized fashion the whole device 1.

The operation of the device 1 is as follows.

The device 1 is configured for segmenting into a plurality of gobs one or more continuous and monolithic casts of molten glass that flow out of the casting hopper, commonly named as "feeder". To this end, the device 1 is configured for segmenting by cut as many casts as the pairs of blades BL that it includes, thus forming an identical number of gobs in each cut.

In the embodiment illustrated herein the device 1 is configured for the contemporary cut of two gobs because on each blade carrying unit 11 two blades BL are installed.

As known, the cut occurs by means of a reciprocating motion with opposite directions of the blade-carrying carriages 8, 10, which are movable between a position of maximum mutual distance and a position of minimum mutual distance corresponding to the extreme points of the respective reciprocating motions along the direction of travel T guided by the guides 4, 6. In case of a transmission including a crank and rod mechanism, the extreme positions of the blade-carrying carriages 8, 10 are defined by the dead centres of the mechanism itself.

The rotary electric motors 16 operate independently the corresponding blade-carrying carriages 8, 10 via a driving in rotation of the pinion and a subsequent driving in translation along the axis X22 of the racks 22.

The transmission that connects the electric motors 16 to the blade-carrying carriages 8, 10 thus allows to convert the rotary motion received by the rotary electric motor 16 into a linear motion in the direction of travel T of the carriages 8, 10.

The aforesaid linear motion occurs in reciprocating fashion (back/forth) and each carriage 8, 10 moves in a mirror-like fashion with respect to the other, that is to say the operation occurs along the direction of travel T, but each carriage moves with an opposite direction with respect to the other, so as to achieve alternatively an approaching or a departure of the blades BL.

As it is known to the man skilled in the art, the cut and formation of the gob thus takes place during the movement towards the position of minimum mutual distance of the blade-carrying carriages 8, 10, which substantially corresponds to the movement towards a contact or overlapping condition between the blades BL. This latter condition occurs in case the blades BL are mounted staggered in height as previously indicated. In that case, we repeat, the position of minimum mutual distance corresponds to a condition of overlap of the blades BL.

The driving of the carriages 8, 10 with a reciprocation motion along the direction of travel T occurs by controlling the two motors 16 independently and with a closed loop logic (or, according to the applications, even in open loop), for example as a function of parameters that may comprise the shape and the position of the gob, and/or the position, the speed and the acceleration of blades BL. This results in an independent operation of the two blade-carrying carriages 8, 10 by the motors 16, which drive, as said, a reciprocating motion thereof along the direction of travel T so as to alternatively determine the mutual approaching or departure.

To this end, the control may occur both automatically and manually, for example via the intervention of an operator.

In case of automatic operation, it is possible to equip the device 1 with a control unit for the rotary electric motors 16 comprising an automated vision system configured to detect at least one parameter characteristic of the cutting process of the gobs of molten glass, and furthermore configured to drive independently each of the rotary electric motors 16 as a function of the value of said at least one parameter.

In particular, in various embodiments of the device 1 said at least one parameter includes, in combination or in alternative:
- the shape of a gob of molten glass during cut,
- the position of one or more blades BL carried by each of the first and the second blade-carrying carriage 8, 10,
- the speed of one or more blades BL carried by each of the first and second blade-carrying carriage 8, 10,
- the acceleration of one or more blades BL carried by each of the first and second blade-carrying carriage 8, 10.

The aforesaid control unit, that constitutes an interesting option in terms of quality of the finished product, can be based on a vision system with high speed cameras, optical lasers, or even ultrasonic devices that allow to obtain instantaneously an information as to the aforesaid parameters characteristics of the cutting process.

On the basis of such parameters one can intervene in a real time on the driving of the blade-carrying carriages 8, 10, particularly the rotary electric motors 16 of each motor unit 12, 14 may be driven so as to obtain the desired position, speed and acceleration values of the blade-carrying carriages 8, 10.

By doing so, every irregularity that is detected in the position and/or in the dynamics (speed and/or acceleration) thereof can be corrected, thereby varying in a controlled manner the position and/or the dynamics thereof completely independently (and, if it is the case, asymmetrically) for each of the two carriages 8, 10.

Thanks to the device 1 according to the invention, it is possible to contemporary satisfy the two requirements listed in the foregoing description.

Particularly, it is possible to drive independently the movement of each of the blade-carrying carriages (8, 10), thereby correcting singularly the anomalies on/or the deviations thereof with respect to a desired condition determined by the cut conditions. At the same time, it is possible to reach high cutting frequencies thanks to the fact that the interposition of a mechanical transmission between the motors 16 and the carriages 8, 10 that constitute the driven members of the system, allows to reduce the equivalent inertia referred to the axis of rotation Z16 of the rotor of each motor 16 thanks to the transmission ratio between the pinion 20 and the rack 22. This allows ultimately to operate with higher accelerations and to reach thereby a higher cutting frequency.

Nevertheless, it should be observed that whenever the cutting frequency is so high to determine a critical condition for the operation of the motors 16 due to the repeated inversions in the sense of rotation, the resort to a solution wherein the mechanical transmission between the motors 16 and the blade-carrying carriages 8, 10 is of the type with a crank and rod mechanism allows also to solve this inconvenient. In fact, in case of adoption of a crank and rod mechanism, the inversion of motion of the carriages 8, 10 is an intrinsic feature of the mechanism itself.

Of course, the constructional details and the embodiments may be widely varied with respect to what described and illustrated, without by this falling out of the scope of the invention, as defined by the appended claims.

In particular, although the embodiment illustrated herein envisages the use of two parallel rectilinear guides, in alternative embodiments it is possible to arrange a single rectilinear guide for each blade-carrying carriage 8, 10, possibly envisaging to leave the central area of the frame 2 free to favour the crossing of the gobs. A possible solution consists in supporting the sole rectilinear guide by means of crosspieces bridging the two opposite sides of the frame 2 parallel to the axes X4, X6.

Furthermore, although the embodiment illustrated herein envisages the use of tubular rectilinear guides having circular section, it is possible to use other sections, for example a polygonal, quadrangular, or triangular section, thereby setting up a prismatic guide. It is also possible the use of a spline configured for a sliding coupling under load.

In case of use of a single rectilinear guide the polygonal section constitutes substantially a preferential choice to maintain the attitude of the blade-carrying carriages 8, 10, thereby avoiding the possibility of rolling.

Furthermore, the position of the motors 16 and in general of the motor units 12 and 14, may vary as a function of the structure of the device 1, of the type of mechanical transmission, of the number of the linear guides and the configuration of the vision system that allows to drive the motors themselves, all with a view to the reaching of a configuration with overall dimensions which are as advantageous as possible.

## Claims

1. A device (1) for cutting and forming of gobs of molten glass, including:
- a support frame (2),
- a first blade-carrying carriage (8), and a second blade-carrying carriage (10), each including at least one blade (BL) for cutting gobs of molten glass, said first and second blade-carrying carriages (8, 10) being movable in a direction of travel (T) along at least one linear guide (4, 6) between a position of minimum mutual distance and a position of maximum mutual distance,
- a first and a second motor unit (12, 14) each operatively associated to a corresponding one of said first (8) and second (10) blade-carrying carriages, each of said first and second motor units (12, 14) being configured to drive said first (8) and second (10) blade-carrying carriages independently and with a reciprocating motion along said direction of travel (T), so as to determine alternatively a mutual approaching or departure,
- the device (1) being **characterized in that** each motor unit (12, 14) includes a rotary electric motor (16) and a transmission (18, 20, 22) that connects said rotary electric motor (16) to the corresponding blade-carrying carriage (8, 10) and is configured to transform the rotary motion received by the rotary electric motor (16) in a linear motion of the corresponding blade-carrying carriage (8, 10) along the direction of travel (T).

2. A device (1) according to claim 1, including two rectilinear guides (4, 6) extending in a longitudinal direction parallel to said direction of travel (T).

3. The device (1) according to claim 2, wherein each blade-carrying carriage (8, 10) is borne by said rectilinear guides (4, 6) by means of a first and a second slider (8A, 8B; 10A, 10B) slidably mounted on a corresponding one of said rectilinear guides (4, 6) each blade-carrying carriage (8, 10) being connected to said first and second sliders (8A, 8B; 10A, 10B).

4. The device (1) according to claim 3, wherein each slider (8A, 8B; 10A,10B) has a substantially "T"-shape including a first portion configured to enable the sliding of the slider (8A, 8B; 10A, 10B) along the corresponding rectilinear guide (4, 6) and cylindrical collar (C) extending in an orthogonal direction to said first portion and defining a seat for the coupling with the corresponding blade-carrying carriage (8, 10).

5. The device (1) according to any of the previous claims, wherein said transmission (18, 20, 22) is a mechanical transmission.

6. The device (1) according to claim 5, wherein said mechanical transmission (18, 20, 22) includes:
- a pinion (20) connected in rotation to a rotor of said rotary electric motor (16), and
- a rack (22) movable along a corresponding longitudinal axis (X22) parallel to said direction of travel (T) and meshing with said pinion (22),
- said rack (22) being fixed to a corresponding blade-carrying carriage (8, 10) and being translating therewith.

7. The device (1) according to claim 5, wherein said mechanical transmission (18, 20, 22) includes a crank and rod mechanism, wherein said crank is connected in rotation to a rotor of said rotary electric motor (16), while said rod includes a first end articulated to and end of said crank, and a second end articulated to the corresponding blade-carrying carriage (8, 10).

8. The device (1) according to any of the previous claims, further including a control unit for the rotary electric motors (16) comprising an automated vision system configured for detecting at least one parameter characteristic of the cutting process of the gobs of molten glass, and furthermore configured to drive independently each of the rotary electric motors (16) as a function of said at least one parameter.

9. The device (1), according to claim 8, wherein said at least one parameter includes, in combination or in alternative:
- the shape of a gob of molten glass during the cut,
- the position of a gob of molten glass during the cut,
- the position of one or more blades (BL) carried by each of said first and second blade-carrying carriages (8, 10),
- the speed of one or more blades (BL) carried by each of said first and second blade-carrying carriages (8, 10),
- the acceleration of one or more blades (BL) carried by each of said first and second blade-carrying carriages (8, 10).

## Patentansprüche

1. Vorrichtung (1) zum Schneiden und Formen von Klumpen aus geschmolzenem Glas, die aufweist:
- einen Halterungsrahmen (2),
- einen ersten eine Klinge tragenden Schlitten (8) und einen zweiten eine Klinge tragenden Schlitten (10) die jeweils wenigstens eine Klinge (BL) zum Schneiden von Klumpen von geschmolzenem Glas aufweisen, wobei der erste und der zweite eine Klinge tragende Schlitten (8, 10) in eine Fahrtrichtung (T) entlang wenigstens einer linearen Führung (4, 6) zwischen einer Position eines minimalen gegenseitigen Abstands und einer Position eines maximalen gegenseitigen Abstands bewegbar sind,
- eine erste und eine zweite Motoreinheit (12, 14), die jeweils einem entsprechenden von dem ersten (8) und dem zweiten (10) eine Klinge tragenden Schlitten wirksam zugeordnet sind, wobei jeder von der ersten und der zweiten Motoreinheit (12, 14) dazu ausgestaltet ist, den ersten (8) und den zweiten (10) eine Klinge tragenden Schlitten unabhängig voneinander und mit einer Hin- und Her-Bewegung entlang der Fahrtrichtung (T) zu verfahren, um so entweder ein gegenseitiges Annähern oder Entfernen voneinander zu verursachen,
- wobei die Vorrichtung (1) **dadurch gekennzeichnet ist, dass** jede Motoreinheit (12, 14) einen rotierenden Elektromotor (16) und eine Übertragung (18, 20, 22) aufweist, die den rotierenden Elektromotor (16) mit dem entsprechenden eine Klinge tragenden Schlitten (8, 10) verbindet und dazu ausgestaltet ist, die vom rotierenden Elektromotor (16) erhaltene Rotationsbewegung in eine lineare Bewegung des entsprechenden die Klinge tragenden Schlittens (8, 10) entlang der Fahrtrichtung (T) umzuwandeln.

2. Vorrichtung (1) nach Anspruch 1, die zwei geradlinige Führungen (4, 6) aufweist, die in einer Längsrichtung parallel zur Fahrtrichtung (T) verlaufen.

3. Vorrichtung (1) nach Anspruch 2, wobei jeder eine Klinge tragender Schlitten (8, 10) durch die geradlinigen Führungen (4, 6) mittels eines ersten und eines zweiten, verschiebbar an einer zugehörigen der geradlinigen Führungen (4, 6) montierten Schiebers (8A, 8B; 10A, 10B) gehalten wird, wobei jeder eine Klinge tragender Schlitten (8, 10) mit dem ersten und zweiten Schieber (8A, 8B; 10A, 10B) verbunden ist.

4. Vorrichtung (1) nach Anspruch 3, wobei jeder Schieber (8A, 8B; 10A, 10B) im Wesentlichen eine "T"-Form hat, aufweisend einen ersten Abschnitt, der dazu ausgestaltet ist, das Verschieben des Schiebers (8A, 8B; 10A, 10B) entlang der entsprechenden geradlinigen Führung (4, 6) zu ermöglichen, und einen zylindrischen Kragen (C), der sich in einer orthogonalen Richtung zum ersten Abschnitt erstreckt und eine Aufnahme für die Kopplung mit dem entsprechenden eine Klinge tragenden Schlitten (8, 10) definiert.

5. Vorrichtung (1) nach einem der vorhergehenden Ansprüche, wobei die Übertragung (18, 20, 22) eine mechanische Übertragung ist.

6. Vorrichtung (1) nach Anspruch 5, wobei die Übertragung (18, 20, 22) aufweist:
- ein Zahnrad (20), das in mit einem Rotor des rotierenden Elektromotors (16) drehverbunden ist, und
- eine Zahnstange (22), die entlang einer entsprechenden Längsachse (X22) parallel zur Fahrtrichtung (T) bewegbar ist und mit dem Zahnrad (22) verzahnt im Eingriff ist,
- wobei die Zahnstange (22) an einem entsprechenden eine Klinge tragenden Schlitten (8, 10) befestigt ist und damit verschoben wird.

7. Vorrichtung (1) nach Anspruch 5, wobei die mechanische Übertragung (18, 20, 22) einen Kurbelstangenmechanismus aufweist, wobei die Kurbel mit einem Rotor des rotierenden Elektromotors (16) drehverbunden ist, wobei die Stange ein erstes Ende aufweist, das am Ende der Kurbel gelenkig befestigt ist, und ein zweites Ende, das an dem entsprechenden eine Klinge tragenden Schlitten (8, 10) gelenkig verbunden ist.

8. Vorrichtung (1) nach einem der vorhergehenden Ansprüche, die weiterhin aufweist eine Steuereinheit für die rotierenden Elektromotoren (16), die ein automatisiertes Sichtsystem aufweist, das dazu ausgestaltet ist, wenigstens einen Parameter zu erfassen, der für den Schneideprozess der Klumpen des geschmolzenen Glases charakteristisch ist, und
weiterhin dazu ausgestaltet ist, jeden der rotierenden Elektromotoren (16) über eine Funktion des wenigstens einen Parameters unabhängig zu verfahren.

9. Vorrichtung (1) nach Anspruch 8, wobei der wenigstens eine Parameter in Kombination oder als Alternative aufweist:
- die Form eines Klumpens von geschmolzenem Glas während des Schnitts,
- die Position eines Klumpens von geschmolzenem Glas während des Schnitts,
- die Position von einer oder mehreren Klingen (BL), die von jedem der ersten und zweiten eine Klinge tragenden Schlitten (8, 10) getragen werden,
- die Geschwindigkeit von einer oder mehreren Klingen (BL), die von jedem der ersten und zweiten eine Klinge tragenden Schlitten (8, 10), getragen werden,
- die Beschleunigung von einer oder mehreren Klingen (BL), die von jedem der ersten und zweiten eine Klinge tragenden Schlitten (8, 10) getragen werden.

## Revendications

1. Dispositif (1) pour couper et former des paraisons de verre fendu, comportant :
- un cadre de support (2),
- un premier chariot porte-lame (8) et un deuxième chariot porte-lame (10), chacun comportant au moins une lame (BL) pour couper des paraisons de verre fondu, lesdits premier et deuxième chariots porte-lames (8, 10) pouvant se déplacer dans une direction de déplacement (T) le long d'au moins un guide linéaire (4, 6) entre une position de distance mutuelle minimale et une position de distance mutuelle maximale,
- des première et deuxième unités motrices (12, 14), associées chacune de manière fonctionnelle à un chariot correspondant desdits premier (8) et deuxième (10) chariots porte-lames, chacune desdites première et deuxième unités motrices (12, 14) étant configurée pour entraîner lesdits premier (8) et deuxième (10) chariots porte-lames indépendamment et selon un mouvement réciproque le long de ladite direction de déplacement (T), afin de déterminer alternativement un rapprochement ou un écartement mutuel,
- le dispositif (1) étant **caractérisé en ce que** chaque unité motrice (12, 14) comporte un moteur électrique rotatif (16) et une transmission (18, 20, 22) qui relie ledit moteur électrique rotatif (16) au chariot porte-lame correspondant (8, 10) et est configurée pour transformer le mouvement rotatif reçu par le moteur électrique rotatif (16) en un mouvement linéaire du chariot porte-lame correspondant (8, 10) le long de la direction de déplacement (T).

2. Dispositif (1) selon la revendication 1, comportant deux guides rectilignes (4, 6) s'étendant dans une direction longitudinale parallèle à ladite direction de déplacement (T).

3. Dispositif (1) selon la revendication 2, dans lequel chaque chariot porte-lame (8, 10) est supporté par lesdits guides rectilignes (4, 6) au moyen de premier et deuxième coulisseaux (8A, 8B ; 10A, 10B) montés en coulissement sur un guide correspondant desdits guides rectilignes (4, 6), chaque chariot porte-lame (8, 10) étant relié auxdits premier et deuxième coulisseaux (8A, 8B ; 10A, 10B).

4. Dispositif (1) selon la revendication 3, dans lequel chaque coulisseau (8A, 8B ; 10A, 10B) présente une forme essentiellement en « T » comportant une première partie configurée pour permettre le coulissement du coulisseau (8A, 8B ; 10A, 10B) le long du guide rectiligne correspondant (4, 6) et un collier cylindrique (C) s'étendant dans une direction orthogonale à ladite première partie et définissant un siège pour le couplage avec le chariot porte-lame correspondant (8, 10).

5. Dispositif (1) selon l'une des revendications précédentes, dans lequel ladite transmission (18, 20, 22) est une transmission mécanique.

6. Dispositif (1) selon la revendication 5, dans lequel ladite transmission mécanique (18, 20, 22) comporte :
- un pignon (20) relié en rotation à un rotor dudit moteur électrique rotatif (16), et
- une crémaillère (22) pouvant se déplacer le long d'un axe longitudinal correspondant (X22) parallèle à ladite direction de déplacement (T) et s'engrenant avec ledit pignon (22),
- ladite crémaillère (22) étant fixée à un chariot porte-lame correspondant (8, 10) et effectuant une translation avec celui-ci.

7. Dispositif (1) selon la revendication 5, dans lequel ladite transmission mécanique (18, 20, 22) comporte un mécanisme à bielle et manivelle, où ladite manivelle est reliée en rotation à un rotor dudit moteur électrique rotatif (16), tandis que ladite bielle comporte une première extrémité articulée sur une extrémité de ladite manivelle, et une deuxième extrémité articulée sur le chariot porte-lame correspondant (8, 10).

8. Dispositif (1) selon l'une des revendications précédentes, comportant en outre une unité de commande pour les moteurs électriques rotatifs (16) comprenant un système de vision automatisé configuré pour détecter au moins un paramètre caractéristique du procédé de coupe des paraisons de verre fondu, et en outre configuré pour entraîner indépendamment chacun des moteurs électriques rotatifs (16) en fonction dudit au moins un paramètre.

9. Dispositif (1) selon la revendication 8, dans lequel ledit au moins un paramètre comporte en combinaison ou en variante :
- la forme d'une paraison de verre fendu pendant la coupe,
- la position d'une paraison de verre fendu pendant la coupe,
- la position d'une ou de plusieurs lame(s) (BL) portée(s) par chacun desdits premier et deuxième chariots porte-lames (8, 10),
- la vitesse d'une ou de plusieurs lame(s) (BL) portée(s) par chacun desdits premier et deuxième chariots porte-lames (8, 10),
- l'accélération d'une ou de plusieurs lame(s) (BL) portée(s) par chacun desdits premier et deuxième chariots porte-lames (8, 10).
